# EUROPÄISCHE PATENTSCHRIFT

(11) **EP 2 822 802 B1**
(45) Veröffentlichungstag und Bekanntmachung des Hinweises auf die Patenterteilung: **08.05.2019**
(21) Anmeldenummer: 13726486.7
(22) Anmeldetag: 27.05.2013
(51) Int. Cl.: B60L 9/00, B60L 9/18, B60L 9/24, H02M 1/12, B60L 9/30, H02M 1/10, H02J 1/02, H02M 1/15, H02M 3/28, H02M 7/23, H02M 7/483

(54) **VORRICHTUNG FÜR EIN ELEKTRISCH ANGETRIEBENES SCHIENENFAHRZEUG**
DEVICE FOR AN ELECTRICALLY DRIVEN RAIL VEHICLE
DISPOSITIF POUR VÉHICULE FERROVIAIRE ÉLECTRIQUE

(30) Priorität: 30.05.2012 DE 102012209071
(43) Veröffentlichungstag der Anmeldung: 14.01.2015
(73) Patentinhaber: Siemens Mobility GmbH, 81739 München (DE)
(72) Erfinder: GLINKA, Martin, 91080 Uttenreuth (DE)
(86) Internationale Anmeldenummer: PCT/EP2013/060841
(87) Internationale Veröffentlichungsnummer: WO 2013/178574

(56) Entgegenhaltungen:
- DE-A1-102010 039 697
- DE-A1-102010 044 322
- BUSCO B ET AL: "Digital control and simulation for power electronic apparatus in dual voltage railway locomotive", IEEE TRANSACTIONS ON POWER ELECTRONICS, IEEE SERVICE CENTER, PISCATAWAY, NJ, US, Bd. 18, Nr. 5, 1. September 2003 (2003-09-01), Seiten 1146-1157, XP011100063, ISSN: 0885-8993, DOI: 10.1109/TPEL.2003.816198
- CASCONE V ET AL: "Design of active filters for dynamic damping of harmonic currents generated by asynchronous drives in modern high power locomotives", PROCEEDINGS OF THE ANNUAL POWER ELECTRONICS SPECIALISTS CONFERENCE (PESC). TOLEDO, JUNE 29 - JULY 3, 1992; [PROCEEDINGS OF THE ANNUAL POWER ELECTRONICS SPECIALISTS CONFERENCE (PESC)], NEW YORK, IEEE, US, Bd. CONF. 23, 29. Juni 1992 (1992-06-29), Seiten 404-410, XP010064887, DOI: 10.1109/PESC.1992.254852 ISBN: 978-0-7803-0695-0

## Beschreibung

Die Erfindung betrifft eine Vorrichtung für ein elektrisch angetriebenes Schienenfahrzeug, mit einer Schaltungsanordnung, die mit einer Traktionseinheit des Schienenfahrzeugs und - zum Betreiben derselben - mit einer Bahnnetzversorgung verbindbar ist, einem Wechselspannungsmodus, in welchem die Schaltungsanordnung über einen Stromabnehmer mit der Bahnnetzversorgung elektrisch verbunden ist, welche eine Wechselspannung führt, und einem Gleichspannungsmodus, in welchem die Schaltungsanordnung über einen weiteren Stromabnehmer mit der Bahnnetzversorgung elektrisch verbunden ist, welche eine Gleichspannung führt, wobei die Schaltungsanordnung einen aktiven Mehrpol, der im Wechselspannungsmodus als Spannungswandlungsvorrichtung zwischen der Bahnnetzversorgung und der Traktionseinheit geschaltet ist, und eine Kompensationsvorrichtung aufweist, die im Gleichspannungsmodus dazu vorgesehen ist, einem Störanteil eines von der Bahnnetzversorgung bezogenen oder von der Traktionseinheit erzeugten, zur Bahnnetzversorgung fließenden Netzstroms entgegenzuwirken, wobei die Kompensationsvorrichtung zumindest eine Sensoreinheit zur Erfassung zumindest einer Netzstromkenngröße, den aktiven Mehrpol und eine Steuereinheit umfasst, die dazu vorgesehen ist, den aktiven Mehrpol abhängig von der Netzstromkenngröße zu steuern.

Schienenfahrzeuge für den grenzüberschreitenden Verkehr oder für den Verkehr in Netzen mit unterschiedlichen Spannungssystemen sind derart ausgelegt, dass ein Betrieb unter Wechselspannung und Gleichspannung möglich ist. Im Wechselspannungsmodus ist zwischen der Bahnnetzversorgung und der Traktionseinheit eine Einspeiseschaltung vorgesehen, die als Spannungsumwandlungsvorrichtung dient.

In einer weit verbreiteten Ausführung ist die Spannungsumwandlungsvorrichtung als Transformator ausgebildet, der die von der Bahnnetzversorgung geführte Hochspannung in eine Spannung umwandelt, die für den Betrieb der Traktionseinheit geeignet ist. Der Transformator weist eine bahnnetzseitige Primärwicklung und eine Sekundärwicklung auf, die vorteilhaft eine Induktivität darstellt, welche im Gleichspannungsmodus zur Kompensation unerwünschter Störanteile im Netzstrom ausreichend dimensioniert ist.

Bei weiteren Einspeiseschaltungen erfolgt im Wechselspannungsmodus eine Spannungsumwandlung mittels eines Vierpols, welcher aktive Komponenten aufweist. Beispielsweise ist aus der EP 0 670 236 A1 eine Spannungswandlungsvorrichtung bekannt, bei welcher auf den Einsatz eines groß dimensionierten Transformators verzichtet wird und die Spannungsumwandlung mittels aktiver Funktionselemente mit Stromrichterventilen erfolgt. Die Vorrichtung umfasst einen Transformator, der wesentlich kleiner dimensioniert ist als der übliche Haupttransformator einer Einspeiseschaltung.

Ist in der im Wechselspannungsmodus eingesetzten Einspeiseschaltung kein Transformator vorhanden bzw. ist - wie in der oben beschriebenen Ausführung - der vorhandene Transformator für die Funktion der Störstromkompensation nicht ausreichend dimensioniert, wird eine DC-Netzdrossel zur Entkopplung der Traktionseinheit von der DC-Bahnnetzversorgung benötigt. Nach dem Stand der Technik sind die Netzdrosseln aufgrund der anspruchsvollen Störstromgrenzwerte in den meisten DC-Bahnnetzen schwer und platzaufwendig. Die in den DC-Netzdrosseln entstehenden Verluste beeinflussen nennenswert den Gesamtwirkungsgrad der Traktionseinheit.

Aus der DE 10 2010 044 322 A1 ist eine Vorrichtung für ein elektrisch angetriebenes Schienenfahrzeug bekannt, bei welcher eine für einen Betrieb an Wechselspannungsnetzen vorgesehene Gleichrichteranordnung während eines Betriebs an Gleichspannungsnetzen als aktiver Filter zur Erzeugung eines Kompensationsstroms betrieben wird.

Aus dem Artikel BUSCO B et al "Digital control and simulation for power electronic apparatus in dual voltage railway locomotive", IEEE TRANSACTIONS ON POWER ELECTRONICS, vol. 18, no. 5, p. 1146-1157, ist eine Schaltungsanordnung für ein Schienenfahrzeug, welches sowohl mit einer Wechselspannung als auch mit einer Gleichspannung betreibbar ist, bekannt. Dabei verwirklicht ein einem Transformator nachgeschalteter eingangsseitiger Umrichter eine Filterfunktion, mit der dem Eingangsstrom überlagerte Störfrequenzen herausgefiltert werden.

Aus der DE 10 2010 039 697 A1 ist schließlich ein Mehrsystem-Traktionsstromrichter bekannt.

Der Erfindung liegt die Aufgabe zugrunde, eine Vorrichtung für elektrisch angetriebene Schienenfahrzeuge, die für einen Betrieb im Wechselspannungsmodus über einen aktiven Mehrpol verfügen, bereitzustellen, durch welche eine Störstromkompensationsfunktion im Gleichspannungsmodus mit geringem Aufwand implementiert werden kann.

Hierzu wird vorgeschlagen, dass der Mehrpol in einem Traktionsmodus Eingänge aufweist, welche im Wechselspannungsmodus als bahnnetzseitige Eingänge ausgebildet sind und im Gleichspannungsmodus mit einer Energiequelle zur Versorgung des Mehrpols mit elektrischer Energie verbunden sind, die Traktionseinheit mit einem Zwischenkreis verbunden ist, welcher im Wechselspannungsmodus eine gleichgerichtete Spannung führt und im Gleichspannungsmodus direkt an die Bahnnetzversorgung angeschlossen ist, und der Mehrpol Ausgänge aufweist, welche im Wechselspannungsmodus den Zwischenkreis mit elektrischer Energie speisen und im Gleichspannungsmodus einen Kompensationsstrom erzeugen, welcher mit dem Netzstrom gekoppelt wird. Hierdurch kann eine bestehende, im Gleichspannungsmodus herkömmlicherweise nicht betriebene Einheit vorteilhaft zur Erzeugung eines Kompensationsstroms zur Kopplung mit dem Netzstrom eingesetzt werden, wobei eine Kompensationsvorrichtung mit wenig konstruktivem Aufwand bereit gestellt werden kann, die Welligkeit des im Zwischenkreis geführten Netzstroms überwacht werden kann und daraus resultierenden Störanteilen besonders effizient entgegengewirkt werden können.

Unter einem "Mehrpol" soll eine Schalteinheit verstanden werden, die zumindest zwei Eingänge und zwei Ausgänge aufweist. In einer bevorzugten Ausführung ist der Mehrpol als Vierpol ausgebildet. Unter einem "aktiven Mehrpol" soll ein Mehrpol verstanden werden, welcher aktive Bauelemente, insbesondere halbleitertechnische Schaltelemente wie Transistoren, aufweist. Eingänge des Mehrpols, welche im Wechselspannungsmodus als bahnnetzseitige Eingänge ausgebildet sind, werden zweckmäßigerweise von einer Einrichtung des Mehrpols gebildet, die in der fachmännischen Sprache unter dem Begriff "Einspeiseschaltung" genannt ist.

Dadurch, dass der Kompensationsstrom über dem Zwischenkreis zugewandte Ausgänge des Mehrpols erzeugt wird und daher den Mehrpol über zumindest einen dieser Ausgänge verlässt, um mit dem Netzstrom gekoppelt zu werden, kann ein Energiefluss für die Erzeugung des Kompensationsstroms mit einer Flussrichtung erreicht werden, die für eine mit geringen Verlusten erfolgende Erzeugung des Kompensationsstroms geeignet ist. Hierbei kann diese Energie durch die Eingänge in den Mehrpol fließen. In einer Konfiguration mit umgekehrtem Energiefluss, bei welcher die Einspeiseschaltung den Kompensationsstrom an zumindest einem der Eingänge bereitstellt und dafür Energie über die Ausgänge aus dem Zwischenkreis bezieht, müssen übliche Mehrpole, die für einen optimierten Betrieb im Wechselspannungsmodus ausgelegt sind, in einem Teillastbetrieb betrieben werden, wodurch erhebliche Verluste entstehen können. Dies ist insbesondere darauf zurückzuführen, dass interne Komponenten des Mehrpols wesentlich zur Bereitstellung der Energie für die Einspeiseschaltung betrieben werden.

In der erfindungsgemäßen Konfiguration ist insbesondere eine Ausführung möglich, in welcher die Erzeugung des Kompensationsstroms mittels der Steuerung aktiver Komponenten der Einspeiseschaltung erfolgt, die dafür eine in die Eingänge gespeiste Energie bezieht, welche von einer Quelle vorteilhaft außerhalb, insbesondere ausschließlich außerhalb des Mehrpols bereitgestellt wird. Dadurch besteht für die Steuerung des Mehrpols zur Erzeugung des Kompensationsstroms eine höhere Flexibilität, die vorteilhaft zur Reduzierung von Verlusten in den Komponenten des Mehrpols ausgenutzt werden kann. Insbesondere können gezielt Spannungsbereiche in Teilsystemen des Mehrpols gewählt werden, die für einen Betrieb mit geringen Verlusten geeignet sind.

Unter der Anordnung des aktiven Mehrpols "zwischen" der Bahnnetzversorgung und der Traktionseinheit soll insbesondere verstanden werden, dass sich der aktive Mehrpol im Energiefluss befindet, welcher in einem Traktionsmodus der Traktionseinheit von der Bahnnetzversorgung zur Traktionseinheit fließt und ggf. in einem Bremsmodus der Traktionseinheit von dieser zur Bahnnetzversorgung zurückfließt. Im Gleichspannungsmodus befindet sich der aktive Mehrpol außerhalb des Energieflusses, der mittels einer Netzstromleitung insbesondere direkt von der Bahnnetzversorgung zur Traktionseinheit bzw. in umgekehrter Richtung geführt wird. Die Sensoreinheit ist zur Erfassung der Netzstromkenngröße vorteilhafterweise mit der Netzstromleitung gekoppelt, während die Kompensationsvorrichtung mit der Netzstromleitung zweckmäßigerweise einen Einkopplungspunkt bildet, an dem ein vom aktiven Mehrpol erzeugter Kompensationsstrom in die Netzstromleitung eingekoppelt wird.

Unter dem Begriff "entgegenwirken" soll insbesondere ein Prozess verstanden werden, bei welchem ein Störanteil der Netzstroms vorteilhaft zu mindestens 50%, bevorzugt zu mindestens 75% und besonders bevorzugt zu mindestens 90% kompensiert werden kann. Unter einem "Störanteil" des Netzstroms soll insbesondere ein Anteil des Netzstroms verstanden werden, der in zumindest einer Eigenschaft das Einhalten von durch einen Bahnnetzbetreiber festgelegten Störstromgrenzen nicht erfüllt bzw. einen Nachteil für den Betrieb der Traktionseinheit darstellt. Ein Störanteil des Netzstroms kann insbesondere von Oberschwingungen gebildet sein, die im Betrieb der Traktionseinheit erzeugt werden und in die Bahnnetzversorgung nicht zurückfließen dürfen, oder die von der Bahnnetzversorgung geführt werden und die einen Nachteil für den Betrieb der Traktionseinheit darstellen.

Gemäß einer bevorzugten Ausführung der Erfindung wird vorgeschlagen, dass die Sensoreinheit, die Steuereinheit und der aktive Mehrpol Bestandteile eines Regelkreises sind. Hierdurch kann konstruktiv einfach eine kontinuierliche Überwachung des Netzstroms auf das Vorhandensein von Störanteilen erfolgen.

Vorzugsweise weist der aktive Mehrpol einen Hochspannungsstromricher auf. Hierdurch können besonders effizient und konstruktiv einfach hochfrequenten Störanteilen des Netzstroms entgegengewirkt werden.

Unter einer "Hochspannung" soll in diesem Text eine Spannung verstanden werden, die von der Bahnnetzversorgung zum Betreiben von Schienenfahrzeugen zur Verfügung gestellt wird. Übliche Spannungen in europäischen Netzen haben einen Wert von 25 kV/50 Hz, 15 kV/16 (2/3) Hz, 3 kV oder 1,5 kV. Ein Hochspannungspannungsstromrichter weist zweckmäßigerweise bahnnetzseitige Eingänge auf, die eine von der Bahnnetzversorgung bezogene Hochspannung führt. Insbesondere bildet der Hochspannungsstromrichter Mehrpoleingänge, wobei er die sogenannte Einspeiseschaltung bildet.

In einer bevorzugten Ausführungsform der Erfindung umfasst der Hochspannungsstromrichter zumindest einen modularen Direktumrichter, welcher eine Spannung mittels eines Modulationsverfahrens erzeugt. Unter einem "modularen Direktumrichter" soll ein Stromrichter mit zumindest einem Stromrichterzweig verstanden werden, welcher zumindest aus einer Aneinanderreihung von Modulen besteht, die jeweils wenigstens einen Energiespeicher, insbesondere einen Speicherkondensator, und aktive Schaltelemente zum Zu- und Abschalten des Beitrags des Energiespeichers zur Spannung der Zweiges aufweisen. Mittels der Steuerung der aktiven Schaltelemente kann eine feine Spannungsstufenstruktur bereitgestellt werden, wobei eine Ausgangsspannung des Umrichters durch eine Modulation verschiedener Spannungsstufen fein und mit einer hohen Frequenz eingestellt werden kann. Ein modularer Direktumrichter ist demnach für die Erzeugung eines Kompensationsstroms im Gleichspannungsmodus besonders geeignet. Eine beispielhafte Ausführung und Steuerung eines modularen Direktumrichters kann der Druckschrift DE 101 03 031 A1 entnommen werden. Eine weitere vorteilhafte Betriebsweise ergibt sich, wenn die Spannung der Energiespeicher der Module - gegenüber dem Betrieb als Spannungsumwandlungsvorrichtung im Wechselspannungsmodus - im Gleichspannungsmodus wesentlich kleiner ist. Aufgrund der daraus resultierenden kleineren Stufenspannungen an den Ausgangsklemmen des modularen Direktumrichters kann einem Störanteil des Netzstroms besonders effektiv entgegengewirkt werden. Außerdem reduzieren sich die Schaltverluste des modularen Direktumrichters und die maximale Ausgangsfrequenz des modularen Direktumrichters kann bei Bedarf angehoben werden.

Eine galvanische Trennung der Traktionseinheit von der Bahnnetzversorgung im Wechselspannungsmodus erfolgt vorteilhafterweise mittels zumindest eines Funktionsbauteils des aktiven Mehrpols, welches eine galvanische Trennung zwischen Mehrpolausgängen und Mehrpoleingängen bildet. Das Funktionsbauteil kann insbesondere von einem Transformator gebildet sein.

Vorzugsweise ist bei einer Ausführung des Mehrpols mit einem Hochspannungsstromrichter das Funktionsbauteil- in Bezug auf einen Energiefluss von der Bahnnetzversorgung zur Traktionseinheit - diesem nachgeschaltet. Besonders vorteilhaft ist hierbei das Funktionsbauteil ein Mittelfrequenztransformator, der für Ausgangsfrequenzen des Hochspannungspannungsstromrichters im Mittelfrequenzbereich, insbesondere im Bereich (100 Hz - 10 kHz) ausgelegt ist.

Es kann eine konstruktiv einfache Lösung erreicht werden, wenn der Mehrpol zumindest einen Gleichrichter aufweist, welcher Mehrpolausgänge bildet.

Ferner kann ein den Zwischenkreis und die Traktionseinheit schonender Betrieb im Gleichspannungsmodus erreicht werden, wenn die Vorrichtung ein Entkopplungsmittel aufweist, das dazu vorgesehen ist, ein Fließen des Kompensationsstroms in den Zwischenkreis zumindest zu begrenzen. Das Entkopplungsmittel kann insbesondere als Induktivität ausgebildet sein.

Es kann außerdem ein den Mehrpol schonender Betrieb im Gleichspannungsmodus erreicht werden, wenn die Vorrichtung ein Entkopplungsmittel aufweist, das dazu vorgesehen ist, im Gleichspannungsmodus einen Gleichspannungsanteil einer von der Bahnnetzversorgung bezogenen Spannung vom Mehrpol zu entkoppeln. Hierdurch kann das Fließen eines Gleichstroms durch Ausgänge des Mehrpols in den Mehrpol zumindest vermindert, insbesondere verhindert werden, wobei eine Kopplung eines vom Mehrpol erzeugten Kompensationsstroms mit dem Netzstrom dennoch möglich ist. Insbesondere kann das Entkopplungsmittel als Kapazität ausgebildet sein.

Die Energiequelle ist in einer Ausführung der Erfindung eine Hilfsbetriebsversorgung des Schienenfahrzeugs, wodurch eine besonders einfache Versorgung durch den Anschluss an ein bestehendes Bordnetz des Schienenfahrzeugs erreicht werden kann.

Alternativ kann die Energiequelle ein Energiespeicher sein, wodurch eine insbesondere im Wechselspannungsmodus gespeicherte Energie für einen Betrieb der Kompensationsvorrichtung im Gleichspannungsmodus verbraucht werden kann.

Gemäß einer weiteren, konstruktiv einfachen Ausführungsvariante ist die Traktionseinheit mit einem eine gleichgerichtete Spannung führenden Zwischenkreis verbunden, der im Gleichspannungsmodus als Energiequelle für den Mehrpol dient, wobei ein erstes Entkopplungsmittel dazu vorgesehen ist, im Gleichspannungsmodus einen Gleichspannungsanteil der von der Bahnnetzversorgung bezogenen Spannung vom Mehrpol zu entkoppeln, und ein weiteres Entkopplungsmittel dazu vorgesehen ist, ein Fließen des vom Mehrpol erzeugten Kompensationsstroms in den Zwischenkreis zumindest zu begrenzen.

Es werden Ausführungsbeispiele der Erfindung anhand der Zeichnungen erläutert. Es zeigen:
- Figur 1:: eine elektrische Schaltung eines Schienenfahrzeugs mit einer Kompensationsvorrichtung und einer Traktionseinheit,
- Figur 2:: eine detaillierte Ansicht der Kompensationsvorrichtung, mit einem Hochspannungsstromrichter,
- Figur 3:: Spannungssignale, die vom Hochspannungsstromrichter und der gesamten Kompensationsvorrichtung erzeugt werden,
- Figur 4:: eine Ausführung des Hochspannungsstromrichters als modularer Direktumrichter,
- Figur 5:: eine weitere Ausführung des Hochspannungsstromrichters mit einer Kaskadenschaltung von Vollbrücken und
- Figur 6:: die elektrische Schaltung aus Figur 1 mit Entkopplungsmitteln.

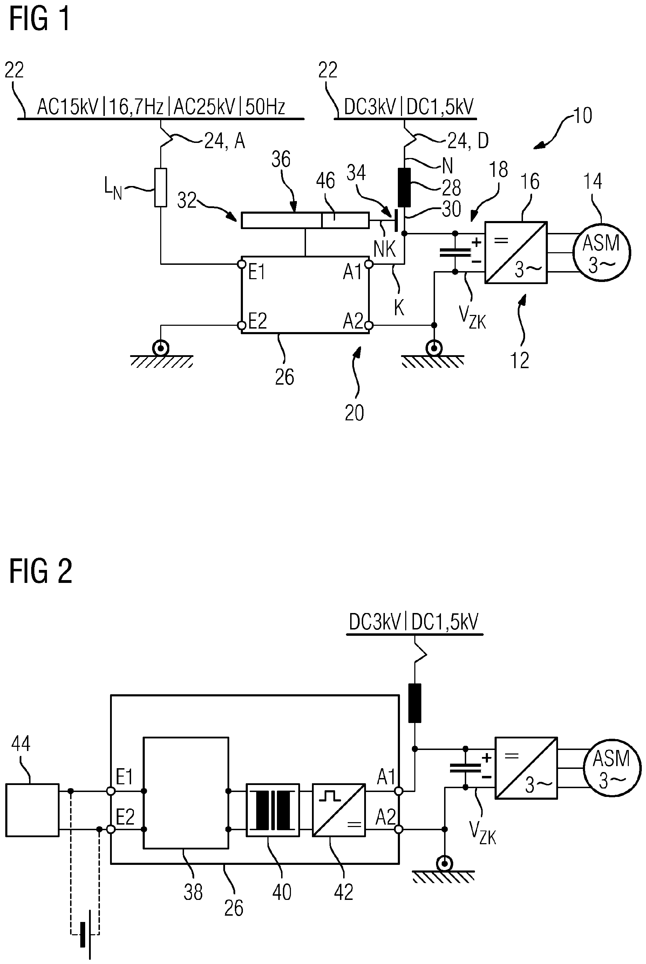

Figur 1 zeigt eine elektrische Schaltung 10 eines Schienenfahrzeugs in einer schematischen Ansicht. Die Schaltung 10 umfasst eine Traktionseinheit 12, die in einem Traktionsmodus des Schienenfahrzeugs zur Erzeugung eines das Schienenfahrzeug antreibenden Drehmoments dient. Diese weist insbesondere einen als asynchrone Maschine ausgebildeten Fahrmotor 14 auf, der mit einer nicht näher dargestellten Antriebsachse des Schienenfahrzeugs mechanisch gekoppelt ist. Die Traktionseinheit 12 weist außerdem eine Leistungsversorgungseinheit 16 auf, die zur Bereitstellung einer für den Betrieb des Fahrmotors 14 notwendigen elektrischen Leistung vorgesehen ist.

Diese ist insbesondere als Pulswechselrichter ausgebildet, welcher ausgehend von einer Gleichspannung V_{ZK} eines Zwischenkreises 18 und für den Betrieb des Fahrmotors 14 einen Wechselstrom mittels Schaltvorgängen von Schaltelementen bzw. Schaltventilen erzeugt. Beispielsweise können diese als IGBT (Insulated Gate Bipolar Transistor) ausgebildet sein.

Die elektrische Schaltung 10 weist außerdem eine Schaltungsanordnung 20 auf, die in einem Betriebsmodus des Schienenfahrzeugs mit der Traktionseinheit 12 und mit einer Bahnnetzversorgung 22 elektrisch verbunden ist. Zur Herstellung eines elektrischen Kontakts mit einer Leitung der Bahnnetzversorgung 22 dienen unterschiedliche Stromabnehmer 24.A und 24.D des Schienenfahrzeugs. Diese Leitung kann eine Oberleitung oder eine im Bodenbereich angeordnete Stromschiene sein. Abhängig von einem Bahnnetzbetreiber kann die Bahnnetzversorgung 22 eine Wechselspannung, die z.B. die für Europa typischen Werte 25 kV/50 Hz oder 15 kV/16 Hz 2/3 aufweisen kann, oder eine Gleichspannung führen, die z.B. die für Europa typischen Werte 1,5 kV oder 3 kV aufweisen kann. Es wird im folgenden Text zwischen einem Wechselspannungsmodus und einem Gleichspannungsmodus unterschieden, abhängig von der durch die Bahnnetzversorgung 22 geführten Hochspannung.

Die Schaltungsanordnung 20 umfasst den Zwischenkreis 18 und zumindest einen aktiven Mehrpol 26, welcher im Wechselspannungsmodus über den Stromabnehmer 24.A mit der Bahnnetzversorgung 22 elektrisch verbunden ist. In diesem Modus dient der Mehrpol 26 als Spannungswandlungsvorrichtung, die dazu dient, mittels aktiver Funktionselemente eine von der Bahnnetzversorgung 22 bezogene Hochspannung in eine heruntertransformierte, gleichgerichtete Spannung umzuwandeln. Diese Spannung entspricht insbesondere der Zwischenkreisspannung V_{ZK} des Zwischenkreises 18, von welchem die Traktionseinheit 12 eine Antriebsenergie bezieht. Im Wechselspannungsmodus ist der Mehrpol 26 demnach im Energiefluss zwischen der Bahnnetzversorgung 22 und der Traktionseinheit 12 bzw. zwischen der Bahnnetzversorgung 22 und dem Zwischenkreis 18 angeordnet. Der Mehrpol 26 ist als Vierpol ausgebildet und speist über dessen Ausgänge A1, A2 den Zwischenkreis 18 mit elektrischer Energie. Im betrachteten Ausführungsbeispiel sind die Ausgänge A1, A2 des Mehrpols 26 direkt an den Zwischenkreis 18 angeschlossen. Die im Wechselspannungsmodus bahnnetzseitigen Eingänge E1, E2 des Mehrpols 26 sind außerdem mit einer Netzdrossel L_{N} verbunden, die zwischen der Bahnnetzversorgung 22 und dem Mehrpol 26 angeordnet ist.

In einem Bremsmodus des Schienenfahrzeugs wirkt der Fahrmotor 14 als Generator, wobei die beim Bremsen erzeugte elektrische Energie in Bremswiderständen in Wärme umgewandelt wird, in Energiespeichern gespeichert wird und/oder über den Mehrpol 26 in die Bahnnetzversorgung 22 zurückgespeist wird. In diesem zuletzt genannten Fall ist der Mehrpol in Bezug auf den Energiefluss ebenfalls zwischen der Traktionseinheit 12 bzw. der Zwischenkreis 18 und der Bahnnetzversorgung 22 geschaltet.

Die Schaltungsanordnung 20 ist im Gleichspannungsmodus über den weiteren Stromabnehmer 24.D mit der Bahnnetzversorgung 22 elektrisch verbunden, wobei der Zwischenkreis 18 über eine Eingangsdrossel 28 direkt - d.h. ohne Zuschaltung einer Spannungswandlungsvorrichtung - mittels einer Netzstromleitung 30 an die Bahnnetzversorgung 22 angeschlossen ist. Die Netzstromleitung 30 ist insbesondere dazu vorgesehen, eine von der Bahnnetzversorgung 22 bezogene elektrische Energie zum Zwischenkreis 18 zu führen. In einer Ausführungsvariante kann zwischen der Eingangsdrossel 28 und dem Zwischenkreis 18 eine Spannungswandlungsvorrichtung in der Form eines Hochsetzstellers angeordnet sein, wobei der Einsatz einer Kompensationsvorrichtung im Gleichspannungsmodus in dieser Ausführung weiterhin von Vorteil ist.

Die Schaltungsanordnung 20 umfasst ferner eine Vorrichtung, die im Gleichspannungsmodus als Kompensationsvorrichtung 32 dient. Diese ist dazu vorgesehen, einem Störanteil eines von der Netzstromleitung 30 geführten Netzstroms N entgegenzuwirken. Dieser Netzstrom N kann - wie oben bereits erwähnt - von der Bahnnetzversorgung 22 bezogen werden oder er kann ein Strom sein, der von der Traktionseinheit 12 erzeugt wird - z.B. im Bremsmodus - und zur Bahnnetzversorgung 22 über die Netzstromleitung 30 zurückfließt.

Die Kompensationsvorrichtung 32 umfasst eine Sensoreinheit 34, die dazu vorgesehen ist, zumindest eine Netzstromkenngröße NK zu erfassen. Diese ist mit der Netzversorgungsleitung 30 gekoppelt und kann abhängig von der Ausführung der Netzstromkenngröße z.B. als Spannungs- und/oder Stromwandler ausgebildet sein.

Als weiterer Bestandteil der Kompensationsvorrichtung 32 ist der Mehrpol 26 vorgesehen, welcher im Wechselspannungsmodus als Spannungswandlungsvorrichtung im Energiefluss dient. Im Gleichspannungsmodus verläuft der Energiefluss von der Bahnnetzversorgung 22 direkt über den Zwischenkreis 18 zur Traktionseinheit 12, wobei der Mehrpol 26 nicht mehr als im Energiefluss angeordnet anzusehen ist. Der Mehrpol 26 ist als Bestandteil der Kompensationsvorrichtung 32 ausgebildet, indem die aktiven Funktionselemente des Mehrpols 26 zur Erzeugung eines Kompensationsstroms K gesteuert werden, der über die Ausgänge A1, A2 des Mehrpols 26 mit dem Netzstrom N gekoppelt wird. Die Kompensationsvorrichtung 32 weist eine Steuereinheit 36 auf, die die erfasste Netzstromkenngröße NK zur Ermittlung des Störanteils des Netzstroms N auswertet und den Mehrpol 26 zur Erzeugung des Kompensationsstroms K steuert, welcher dazu dient, den Störanteil weitestgehend zu kompensieren. Die Sensoreinheit 34 erfasst die Netzstromkenngröße NK des kompensierten Netzstroms N, sodass sie, die Steuereinheit 36 und der Mehrpol 26 einen Regelkreis bilden.

Figur 2 zeigt eine detaillierte Ansicht des Mehrpols 26 aus Figur 1. Die Eingänge E1 und E2 des Mehrpols 26 sind von einem Hochspannungsstromrichter 38 gebildet. Im Wechselspannungsmodus ist an den bahnnetzseitigen Eingängen E1 und E2 eine von der Bahnnetzversorgung 22 bezogene Hochspannung angelegt. Der Hochspannungsstromrichter 38 bildet im Wechselspannungsmodus eine sogenannte Einspeiseschaltung, die diese Hochspannung in eine Wechselspannung mittlerer Frequenz, z.B. mehrere kHz, umwandelt. Der Mehrpol 26 umfasst ferner einen Mittelfrequenztransformator, der für die Umwandlung einer Spannung im Mittelfrequenzbereich ausgelegt ist. Dieses Funktionsbauteil 40 bildet eine galvanische Trennung der Mehrpolausgänge A1, A2 von den Mehrpoleingängen E1, E2. Die Ausgänge des Funktionsbauteils 40 sind mit einem Gleichrichter 42 verbunden, welcher die Ausgänge A1 und A2 des Mehrpols 26 bildet. Der Gleichrichter 42 stellt im Wechselspannungsmodus eine gleichgerichtete Spannung zur Verfügung, die der Zwischenkreisspannung V_{ZK} entspricht. Das Funktionsbauteil 40 und der Gleichrichter 42 sind in der betrachteten Ausführung insbesondere einmalig im Mehrpol 26 vorhanden, sodass der gesamte Energiefluss im Wechselspannungsmodus über diese Einheiten zu bzw. von den Ausgängen A1, A2 fließt.

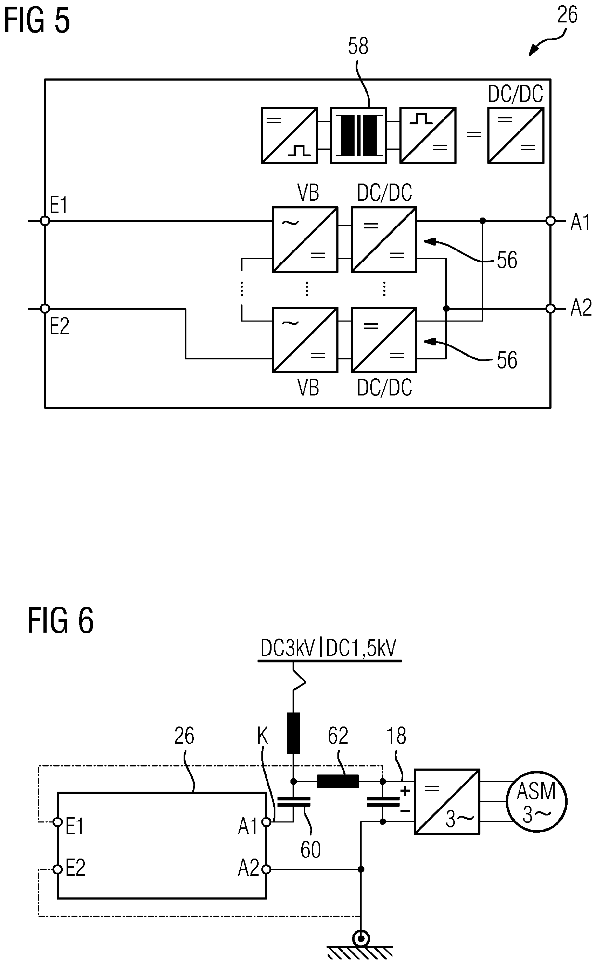

Im Gleichspannungsmodus sind die Mehrpoleingänge E1, E2, welche im Wechselspannungsmodus bahnnetzseitig angeordnet sind, mit einer Energiequelle 44 elektrisch verbunden. Diese Energiequelle 44 dient zur Versorgung des Mehrpols 26 in dessen Funktion als Bestandteil der Kompensationsvorrichtung 32. Im betrachteten Ausführungsbeispiel entspricht die Energiequelle 44 der Hilfsbetriebsversorgung des Schienenfahrzeugs. Diese dient herkömmlicherweise zur Versorgung elektrischer Verbraucher des Schienenfahrzeugs, wie insbesondere Klimaaggregate, Beleuchtungseinrichtungen, Steckdosen, Luftkompressore usw. Eine alternative Ausführung der Energiequelle 44 als Energiespeicher, wie z.B. in der Form eine Bordbatterie, ist gestrichelt dargestellt. In einer weiteren Ausführung kann der Mehrpol 26 dessen Energie vom Zwischenkreis 18 beziehen. Diese Ausführung ist mittels einer strichpunktierten Verbindung in Figur 6 dargestellt.

Die Funktionsweise der Kompensationsvorrichtung 32 wird im Folgenden erläutert.

Im Gleichspannungsmodus wird mittels der Sensoreinheit 34 die Netzstromkenngröße NK erfasst. Auf der Basis der erfassten Netzstromkenngröße NK wird mittels einer Recheneinheit 46 der Steuereinheit 36 ermittelt (siehe Figur 1), ob der Netzstrom N einen Störanteil aufweist, welcher in zumindest einer Eigenschaft das Einhalten vorbestimmter Grenzwerte erfüllt. Beispielsweise kann auf der Basis der Netzstromkenngröße NK ermittelt werden, ob der Netzstrom N Oberschwingungen aufweist, die in ihrer Amplitude bzw. Frequenz oberhalb von zugelassenen Werten liegen. Anders ausgedrückt kann hiermit die Welligkeit des Netzstroms N analysiert werden. Hierzu stehen bekannte Verfahren zur Verfügung, wie z.B. die Fourier-Analyse und/oder ein Filtern mittels eines Bandpassfilters. Werden störende Eigenschaften erkannt, wird der Hochspannungsstromrichter 38 von der Steuereinheit 36 derart gesteuert, dass er ausgehend von der Spannung, die von der Energiequelle 44 zur Verfügung gestellt wird, eine Kompensationsspannung an dessen Ausgang erzeugt. Diese Kompensationsspannung weist einen zeitlichen Spannungsverlauf auf, der weitestgehend dem ermittelten Spannungsverlauf des Störanteils entspricht. Dieses Signal wird vom Vierpol 26 derart erzeugt, dass der Kompensationsstrom K eine Phasenverschiebung von 180° gegenüber dem Störanteil im Netzstrom N aufweist und bei einer Kopplung mit dem Netzstrom N eine destruktive Interferenz des Störanteils und des Kompensationsstroms K erfolgt.

Die typischen Frequenzen des Störanteils des Netzstroms N, insbesondere in einem Frequenzbereich bis 3 kHz, können größer oder kleiner sein als die Frequenzen im Mittelfrequenzbereich, für welchen der Mittelfrequenztransformator bzw. das Funktionsbauteil 40 ausgelegt ist und als die maximale Taktfrequenz des Gleichrichters 42, sodass die vom Hochspannungsstromrichter 38 erzeugte, hochfrequente oder niederfrequente Spannungsstruktur an den Mehrpolausgängen A1, A2 gegeben ist.

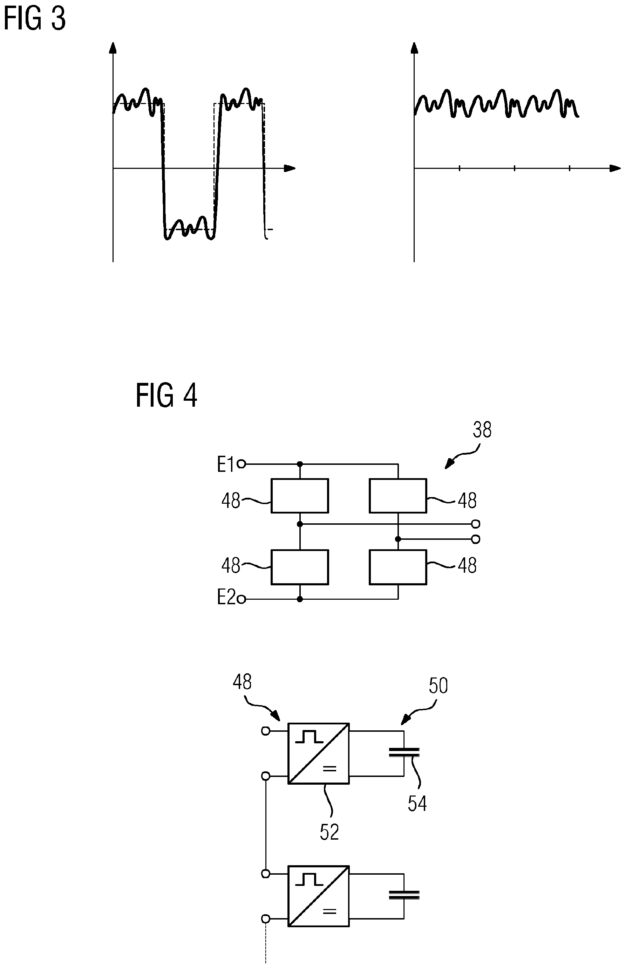

Figur 3 zeigt beispielhaft die Spannungssignale, die vom Hochspannungsstromrichter 38 (linker Teil) und vom Gleichrichter 42 (rechter Teil) bei einer Kompensation von hochfrequenten Störanteilen des Netzstroms N als Funktion der Zeit erzeugt werden. Wie oben bereits erörtert erzeugt der Hochspannungsstromrichter 38 ein Signal mittlerer Frequenz, und zwar in einem Frequenzbereich, auf welchen das Funktionsbauteil 40 bzw. der Mittelfrequenztransformator ausgelegt ist. Die mittelfrequente Struktur ist mit einer Struktur höherer Frequenz überlagert, die mittels einer feinen Steuerung der Schaltelemente des Hochspannungsstromrichters 38 auf der Basis der ausgewerteten Netzstromkenngröße NK durch die Steuereinheit 36 erzeugt wird. Der mittelfrequente Anteil wird vom Gleichrichter 42 gleichgerichtet, wobei die hochfrequente Struktur am Gleichrichterausgang, und daher an den Ausgängen A1, A2 des Mehrpols 26 vorhanden ist. Diese Struktur dient dazu, durch Phasenverschiebung den Störanteil des Netzstroms N weitestgehend zu kompensieren.

Beim Betreiben des Mehrpols 26 als Bestandteil der Kompensationsvorrichtung 32 verläuft der Energiefluss der zur Erzeugung des Kompensationsstroms K notwendigen Energie von der außerhalb des Mehrpols 26 angeordneten Energiequelle 44 zu den Eingänge E1, E2, wodurch die außerhalb des Mehrpols 26 erzeugte Energie durch die Eingänge E1, E2 in die vom Hochspannungsstromrichter 38 gebildete Einspeiseschaltung eingespeist wird.

Figur 4 zeigt den Hochspannungsstromrichter 38 in einer Ausführung als modularer Direktumrichter. Dieser weist vier Zweige 48 auf, die in einer Brückentopologie mit zwei Brücken angeordnet sind. Die Ausgangsspannung des Hochspannungsstromrichters 38 ist an den Brückenmittelpunkten abgeleitet. Die Zweige 48 bestehen jeweils aus einer Aneinanderreihung identischer Subsysteme, auch Module 50 genannt, die zusätzlich zu einer Schaltgruppe 52 zumindest einen Energiespeicher 54, insbesondere in der Form einer Kapazität, aufweisen. Eine Schaltgruppe 52 weist einen Satz von Schaltelementen auf, die insbesondere in Vollbrückenschaltung geschaltet sind, und hat die Funktion, den Energiespeicher 54 zu- bzw. abzuschalten. Hierbei kann der Energiespeicher 54 im zugeschalteten Zustand geladen oder entladen werden und er kann daher - von der Schaltgruppe getriggert - mit einem bestimmten Vorzeichen zur Spannung des Zweigs 48 beitragen. Die Funktionsweise eines derartigen Direktumrichters ist z.B. in der Offenlegungsschrift DE 101 03 031 A1 beschrieben. Die Module 50 sind in einem Zweig in Reihe geschaltet und die Spannung am Brückenmittelpunkt zwischen zwei Zweigen und zu einem bestimmten Zeitpunkt kann durch die Anzahl der beitragenden Energiespeicher 54 und deren Vorzeichen festgelegt werden. Die Ausgangsspannung des Hochspannungsumrichers 38 ist das Ergebnis eines Modulationsverfahrens, bei welchem eine Mittelung zwischen Stufen einer feinen Spannungsstufenstruktur erfolgt. Ein derartiger modularer Direktumrichter ist für die Bereitstellung einer feinen Spannungsstruktur zur Erzeugung eines Kompensationsstroms - wie in Figur 3 gezeigt - besonders gut geeignet. Die Spannungen der Energiespeicher 54, auch "Modulspannung" des entsprechenden Moduls 50 genannt, können im Gleichspannungsmodus beim Betreiben des Mehrpols 26 als Bestandteil der Kompensationsvorrichtung 32 gegenüber dem Wechselspannungsmodus signifikant abgesenkt werden. Beispielsweise ist gegenüber einer im Wechselspannungsmodus typischen Modulspannung von 1500V eine Modulspannung für den Gleichspannungsmodus von ca. 100V denkbar. Aufgrund der daraus resultierenden kleineren Spannungsstufen an den Ausgängen des Hochspannungsstromrichters 38 kann dem Störanteil des Netzstroms N besonders effizient entgegengewirkt werden. Außerdem können Schaltverluste des Hochspannungsstromrichters 38 reduziert werden.

Figur 5 zeigt eine weitere Ausführung des Mehrpols 26. Um unnötige Wiederholungen zu vermeiden werden lediglich die Unterschiede zur oben beschriebenen Ausführung beschrieben. Beide Ausführungen unterscheiden sich in der Ausbildung der Schaltung, die im Wechselspannungsmodus als Einspeiseschaltung dient. Diese weist eine Kaskade von identischen Umrichtereinheiten 56 auf, die jeweils einen Gleichrichter in der Form einer Vollbrückenschaltung VB und einen mit diesem in Reihe geschalteten DC-DC-Wandler umfassen. Die Struktur des DC-DC-Wandlers ist oben rechts gezeigt. Insbesondere weist dieser ein Funktionsbauteil 58 in der Form eines Mittelfrequenztransformators auf, welches eine galvanische Trennung zwischen den Mehrpoleingängen E1, E2 und den Mehrpolausgängen A1, A2 bildet. Die Mehrpoleingänge E1, E2 sind von einer Reihenschaltung der Vollbrückenschaltungen VB gebildet und die Mehrpolausgänge A1, A2 weisen eine Spannung auf, die von einer Parallelschaltung der DC-DC-Wandler erzeugt wird. Diese Art von Einspeiseschaltungen ist insbesondere in der Druckschrift EP 0 670 236 A1 beschrieben. Beim Betreiben des Mehrpols 26 als Bestandteil der Kompensationsvorrichtung 32 verläuft der Energiefluss der zur Erzeugung des Kompensationsstroms K notwendigen Energie von einer außerhalb des Mehrpols 26 angeordneten Energiequelle zu den Eingängen E1, E2. Die außerhalb des Mehrpols 26 erzeugte Energie wird durch die Eingänge E1, E2 in die Einspeiseschaltung eingespeist. Bei einer Situation mit umgekehrtem Energiefluss, in welcher Energie über die Ausgänge A1, A2 aus dem Zwischenkreis 18 bezogen wird und der Kompensationsstrom K an den Eingängen E1, E2 bereitgestellt wird, werden die DC-DC-Wandler gegenüber dem Wechselspannungsmodus in einem Teillastbetrieb betrieben, welcher einen nachteilhaften Wirkungsgrad haben kann. Bei der bevorzugten Konfiguration, bei welcher die Energie über die Eingänge E1, E2 bezogen wird, können Maßnahmen getroffen werden, um die in den DC-DC-Wandlern entstehenden Schaltverluste zu reduzieren. Beispielsweise können die in den Umrichtereinheiten 56 erzeugten Zwischenkreisspannungen gegenüber dem Wechselspannungsmodus reduziert werden. Gegenüber der oben beschriebenen Situation mit umgekehrtem Energiefluss kann eine signifikante Reduzierung der Schaltverluste erreicht werden.

Figur 6 zeigt die Anordnung aus Figur 1, wobei die Schaltungsanordnung 20 zusätzliche Entkopplungsmittel 60, 62 aufweist. Der Übersichtlichkeit halber wurde auf die Darstellung der Sensoreinheit 34 und der Steuereinheit 36 verzichtet. Diese sind jeweils zwischen dem Mehrpol 26 und dem Zwischenkreis 18 geschaltet. Das erste Entkopplungsmittel 60 dient dazu, im Gleichspannungsmodus einen Gleichspannungsanteil einer von der Bahnnetzversorgung 22 bezogenen Spannung vom Mehrpol 26 zu entkoppeln. Dieses ist insbesondere als Kapazität ausgebildet und begrenzt ein unerwünschtes Fließen des von der Bahnnetzversorgung 22 bezogenen Netzstroms N über den Gleichrichter 42 bzw. die DC-DC-Wandler (in der Ausführung nach Figur 5) in den Mehrpol 26. Das weitere Entkopplungsmittel 62, das insbesondere als Induktivität ausgebildet ist, begrenzt ein unerwünschtes Fließen des vom Mehrpol 26 erzeugten Kompensationstroms K in den Zwischenkreis 18.

## Patentansprüche

1. Vorrichtung für ein elektrisch angetriebenes Schienenfahrzeug, mit einer Schaltungsanordnung (20), die mit einer Traktionseinheit (12) des Schienenfahrzeugs und - zum Betreiben derselben - mit einer Bahnnetzversorgung (22) verbindbar ist, einem Wechselspannungsmodus, in welchem die Schaltungsanordnung (20) über einen Stromabnehmer (24.A) mit der Bahnnetzversorgung (22) elektrisch verbunden ist, welche eine Wechselspannung führt, und einem Gleichspannungsmodus, in welchem die Schaltungsanordnung (20) über einen weiteren Stromabnehmer (24.D) mit der Bahnnetzversorgung (22) elektrisch verbunden ist, welche eine Gleichspannung führt, wobei die Schaltungsanordnung (20) einen aktiven Mehrpol (26), der im Wechselspannungsmodus als Spannungswandlungsvorrichtung zwischen der Bahnnetzversorgung (22) und der Traktionseinheit (12) geschaltet ist, und eine Kompensationsvorrichtung (32) aufweist, die im Gleichspannungsmodus dazu vorgesehen ist, einem Störanteil eines von der Bahnnetzversorgung (22) bezogenen oder von der Traktionseinheit (12) erzeugten, zur Bahnnetzversorgung (22) fließenden Netzstroms (N) entgegenzuwirken, wobei die Kompensationsvorrichtung (32) zumindest eine Sensoreinheit (34) zur Erfassung zumindest einer Netzstromkenngröße (NK), den aktiven Mehrpol (26) und eine Steuereinheit (36) umfasst, die dazu vorgesehen ist, den aktiven Mehrpol (26) abhängig von der Netzstromkenngröße (NK) zu steuern,
**dadurch gekennzeichnet, dass**
der Mehrpol (26) in einem Traktionsmodus Eingänge (E1, E2) aufweist, welche im Wechselspannungsmodus als bahnnetzseitige Eingänge ausgebildet sind und im Gleichspannungsmodus mit einer Energiequelle (44, 18) zur Versorgung des Mehrpols (26) mit elektrischer Energie verbunden sind,
die Traktionseinheit (12) mit einem Zwischenkreis (18) verbunden ist, welcher im Wechselspannungsmodus eine gleichgerichtete Spannung (V_{ZK}) führt und im Gleichspannungsmodus direkt an die Bahnnetzversorgung (22) angeschlossen ist, und der Mehrpol (26) Ausgänge (A1, A2) aufweist, welche im Wechselspannungsmodus den Zwischenkreis (18) mit elektrischer Energie speisen und im Gleichspannungsmodus einen Kompensationsstrom (K) erzeugen, welcher mit dem Netzstrom (N) gekoppelt wird.

2. Vorrichtung nach Anspruch 1,
**dadurch gekennzeichnet, dass**
die Sensoreinheit (34), die Steuereinheit (36) und der aktive Mehrpol (26) Bestandteile eines Regelkreises sind.

3. Vorrichtung nach Anspruch 1 oder 2,
**dadurch gekennzeichnet, dass**
der aktive Mehrpol (26) einen Hochspannungsstromricher (38) aufweist.

4. Vorrichtung nach Anspruch 3,
**dadurch gekennzeichnet, dass**
der Hochspannungsstromrichter (38) zumindest einen modularen Direktstromrichter umfasst, welcher eine Spannung mittels eines Modulationsverfahrens erzeugt.

5. Vorrichtung nach einem der vorhergehenden Ansprüche,
**dadurch gekennzeichnet**, das
der Mehrpol (26) zumindest ein Funktionsbauteil (40, 58) aufweist, welches eine galvanische Trennung zwischen Mehrpolausgängen (A1, A2) und Mehrpoleingängen (E1, E2) bildet.

6. Vorrichtung nach einem der vorhergehenden Ansprüche,
**dadurch gekennzeichnet, dass**
der Mehrpol (26) zumindest einen Gleichrichter (42) aufweist, welcher Mehrpolausgänge (A1, A2) bildet.

7. Vorrichtung nach einem der vorhergehenden Ansprüche,
**gekennzeichnet durch**
ein Entkopplungsmittel (62), das dazu vorgesehen ist, ein Fließen des Kompensationsstroms (K) in den Zwischenkreis (18) zumindest zu begrenzen.

8. Vorrichtung nach einem der vorhergehenden Ansprüche, **gekennzeichnet durch** ein Entkopplungsmittel (60), das dazu vorgesehen ist, im Gleichspannungsmodus einen Gleichspannungsanteil einer von der Bahnnetzversorgung (22) bezogenen Spannung vom Mehrpol (26) zu entkoppeln.

9. Vorrichtung nach Anspruch 1,
**dadurch gekennzeichnet, dass**
die Energiequelle (44) eine Hilfsbetriebsversorgung des Schienenfahrzeugs ist.

10. Vorrichtung nach Anspruch 1,
**dadurch gekennzeichnet, dass**
die Energiequelle ein Energiespeicher ist.

11. Vorrichtung nach Anspruch 1,
**dadurch gekennzeichnet, dass**
die Traktionseinheit (12) mit einem eine gleichgerichtete Spannung (V_{ZK}) führenden Zwischenkreis (18) verbunden ist, der im Gleichspannungsmodus als Energiequelle für den Mehrpol (26) dient, wobei ein erstes Entkopplungsmittel (60) dazu vorgesehen ist, im Gleichspannungsmodus einen Gleichspannungsanteil der von der Bahnnetzversorgung (22) bezogenen Spannung vom Mehrpol (26) zu entkoppeln, und ein weiteres Entkopplungsmittel (62) dazu vorgesehen ist, ein Fließen des vom Mehrpol (26) erzeugten Kompensationsstroms (K) in den Zwischenkreis (18) zumindest zu begrenzen.

12. Schienenfahrzeug mit einer Vorrichtung nach einem der vorhergehenden Ansprüche.

## Claims

1. Device for an electrically driven rail vehicle, having a circuit arrangement (20) which can be connected to a traction unit (12) of the rail vehicle and - for operation of the same - to a railway power supply system (22), also having an AC voltage mode in which the circuit arrangement (20) is electrically connected via a pantograph (24.A) to the railway power supply system (22) which conducts an AC voltage, and having a DC voltage mode in which the circuit arrangement (20) is electrically connected via a further pantograph (24.D) to the railway power supply system (22) which conducts a DC voltage, wherein the circuit arrangement (20) has an active multipole (26) which in the AC voltage mode is connected as a voltage conversion device between the railway power supply system (22) and the traction unit (12), and a compensation device (32) which in the DC voltage mode is provided to counteract an interference component of a line current (N) obtained from the railway power supply system (22) or generated by the traction unit (12) and flowing to the railway power supply system (22), wherein the compensation device (32) comprises at least one sensor unit (34) for detecting at least one line current characteristic (NK), the active multipole (26) and a control unit (36) which is provided to control the active multipole (26) as a function of the line current characteristic (NK),
**characterised in that**
the multipole (26) has inlets (E1, E2) in a traction mode which in the AC voltage mode are embodied as railway-power-supply-system-side inlets and in the DC voltage mode are connected to a power source (44, 18) for supplying the multipole (26) with electrical energy,
the traction unit (12) is connected to an intermediate circuit (18) which in the AC voltage mode conducts a rectified voltage (V_{ZK}) and in the DC voltage mode is connected directly to the railway power supply system (22), and the multipole (26) has outlets (A1, A2) which in the AC voltage mode supply the intermediate circuit (18) with electrical energy and in the DC voltage mode generate a compensation current (K) which is coupled to the line current (N).

2. Device according to claim 1,
**characterised in that**
the sensor unit (34), the control unit (36) and the active multipole (26) are components of a control loop.

3. Device according to claim 1 or 2,
**characterised in that**
the active multipole (26) has a high-voltage power converter (38) .

4. Device according to claim 3,
**characterised in that**
the high-voltage power converter (38) comprises at least one modular direct power converter which generates a voltage by means of a modulation procedure.

5. Device according to one of the preceding claims,
**characterised in that**
the multipole (26) has at least one functional component (40, 58) which forms a galvanic isolation between multipole outlets (A1, A2) and multipole inlets (E1, E2).

6. Device according to one of the preceding claims,
**characterised in that**
the multipole (26) has at least one rectifier (42) which forms multipole outlets (A1, A2).

7. Device according to one of the preceding claims,
**characterised by**
a decoupling means (62) which is provided at least to limit a flow of the compensation current (K) into the intermediate circuit (18).

8. Device according to one of the preceding claims,
**characterised by** a decoupling means (60) which in the DC voltage mode is provided to decouple a DC voltage component of a voltage obtained from the railway power supply system (22) from the multipole (26).

9. Device according to claim 1,
**characterised in that**
the power source (44) is an auxiliary operation power supply of the rail vehicle.

10. Device according to claim 1,
**characterised in that**
the power source is a power storage unit.

11. Device according to claim 1,
**characterised in that**
the traction unit (12) is connected to an intermediate circuit (18) conducting a rectified voltage (V_{ZK}), which in the DC voltage mode is used as a power source for the multipole (26), wherein a first decoupling means (60) is provided in the DC voltage mode to decouple a DC voltage component of the voltage obtained from the railway power supply system (22) from the multipole (26), and a further decoupling means (62) is provided at least to limit a flow of the compensation current (K) generated by the multipole (26) into the intermediate circuit (18).

12. Rail vehicle having a device according to one of the preceding claims.

## Revendications

1. Dispositif pour un véhicule ferroviaire entraîné électriquement, comprenant un montage (20), qui peut être connecté à une unité (12) de traction du véhicule ferroviaire et - pour faire fonctionner celui-ci - à une alimentation (22) de réseau de voie ferrée, un mode de tension alternative, dans lequel le montage (20) est connecté électriquement par un appareil (24.A) de prise de courant à l'alimentation (22) du réseau de voie ferrée, qui conduit une tension alternative, et un mode de tension continue, dans lequel le montage (20) est connecté électriquement par un autre appareil (24.D) de prise de courant à l'alimentation (22) du réseau de voie ferrée, qui applique une tension continue, le montage (20) ayant un multipôle (26) actif, qui, dans le mode de tension alternative, est monté en dispositif transformateur de tension entre l'alimentation (22) du réseau de voie ferrée et l'unité (12) de traction, et un dispositif (32) de compensation, qui, dans le mode de tension continue, est prévu pour s'opposer à une proportion parasite d'un courant (N) de réseau fourni par l'alimentation (22) du réseau de voie ferrée ou produit par l'unité (12) de traction, allant à l'alimentation (22) du réseau de voie ferrée, le dispositif (32) de compensation comprenant au moins une unité (34) de capteur, pour détecter au moins une grandeur (NK) caractéristique du courant de réseau, le multipôle (26) actif et une unité (36) de commande, prévue pour commander le multipôle (26) actif en fonction de la grandeur (NK) caractéristique du courant du réseau,
**caractérisé en ce que**
le multipôle (26) a, dans un mode de traction, des entrées (E1, E2), qui, dans le mode de tension alternative, sont constituées en entrées du côté du réseau de voie ferrée et, dans le mode de tension continue, sont connectées à une source (44, 18) d'énergie, pour alimenter le multipôle (26) en énergie électrique,
l'unité (12) de traction est connectée à un circuit (18) intermédiaire, qui applique, dans le mode de tension alternative, une tension (V_{zk}) redressée et qui, dans le mode de tension continue, est connectée directement à l'alimentation (22) du réseau de voie ferrée et
le multipôle (26) a des sorties (A1, A2), qui, dans le mode de tension alternative, alimentent le circuit (18) intermédiaire en énergie électrique et, dans le mode de tension continue, produisent un courant (K) de compensation, qui est couplé au courant (N) de réseau.

2. Dispositif suivant la revendication 1,
**caractérisé en ce que**
l'unité (34) de capteur, l'unité (36) de commande et le multipôle (26) actif font partie d'un circuit de régulation.

3. Dispositif suivant la revendication 1 ou 2,
**caractérisé en ce que**
le multipôle (26) actif a un convertisseur (38) de haute tension.

4. Dispositif suivant la revendication 3,
**caractérisé en ce que**
le convertisseur (38) de haute tension comprend au moins un convertisseur direct, qui produit une tension au moyen d'un procédé de modulation.

5. Dispositif suivant l'une des revendications précédentes,
**caractérisé en ce que**
le multipôle (26) a au moins un composant (40, 58) fonctionnel, qui forme une séparation galvanique entre des sorties (A1, A2) du multipôle et des entrées (E1, E2) du multipôle.

6. Dispositif suivant l'une des revendications précédentes,
**caractérisé en ce que**
le multipôle (26) a au moins un redresseur (42), qui forme des sorties (A1, A2) du multipôle.

7. Dispositif suivant l'une des revendications précédentes,
**caractérisé par**
un moyen (62) de découplage, prévu pour au moins limiter un passage du courant (K) de compensation dans le circuit (18) intermédiaire.

8. Dispositif suivant l'une des revendications précédentes,
**caractérisé par**
un moyen (60) de découplage, prévu pour découpler du multipôle (26), dans le mode de tension continue, une proportion de tension continue d'une tension fournie par l'alimentation (22) du réseau de voie ferrée.

9. Dispositif suivant la revendication 1,
**caractérisé en ce que**
la source (44) d'énergie est une alimentation de fonctionnement auxiliaire du véhicule ferroviaire.

10. Dispositif suivant la revendication 1,
**caractérisé en ce que**
la source d'énergie et un accumulateur d'énergie.

11. Dispositif suivant la revendication 1,
**caractérisé en ce que**
l'unité (12) de traction est connectée à un circuit (18) intermédiaire, appliquant une tension (V_{zk}) redressée et servant, dans le mode de tension continue, de source d'énergie pour le multipôle (26), un premier moyen (60) de découplage étant prévu pour découpler du multipôle (26), dans le mode de tension continue, une proportion de tension continue de la tension fournie par l'alimentation (22) du réseau de voie ferrée et il est prévu un autre moyen (62) de découplage pour au moins limiter un passage du courant (K) de compensation, produit par le multipôle (26), dans le circuit (18) intermédiaire.

12. Véhicule ferroviaire ayant un dispositif suivant l'une des revendications précédentes.
